# DEMANDE DE BREVET EUROPEEN

(11) **EP 1 607 730 A1**
(43) Date de publication de la demande: **21.12.2005**
(21) Numéro de dépôt: 05105020.1
(22) Date de dépôt: 08.06.2005
(51) Int. Cl.: G01M 1/36, F16F 15/32

(54) **Roue pour vehicule dont le balourd statique est modifié, et procédé de fabrication**

(30) Priorité: 14.06.2004 FR 0406433
(71) Demandeur: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Legal, Christian, 63000, Clermont-Ferrand (FR)
(74) Mandataire: Dequire, Philippe Jean-Marie Denis

(57) **Abrégé**

L'invention concerne des roues pour véhicules, dont le balourd statique est modifié et leur procédé de fabrication optimisant l'emplacement de trou de valve.

L'azimut de la position du trou de valve (T) de la roue (1) est situé au plus près de l'opposé de l'azimut du balourd statique (B) de la roue mesuré avant réalisation du trou de valve.

## Description

L'invention concerne des roues pour véhicules, dont le balourd statique est modifié et leur procédé de fabrication optimisant l'emplacement du trou de valve.

Depuis de nombreuses années, on sait que la présence de la valve montée sur la jante de la roue est susceptible de provoquer un déséquilibre dans la répartition des masses qui se manifeste lors de la rotation par des effets nuisibles (vibrations accompagnées d'usure prématurée des pneus, de pièces mécaniques, de problèmes concernant le confort).

Le brevet FR642419 publié en 1928 citait déjà l'inconvénient du déséquilibre apporté par la valve montée sur une roue, et la possibilité de le compenser par une pièce fixée en un point diamétralement opposé.

Le brevet FR973955 de 1948 concernant l'équipement d'une roue avec un pneumatique ayant deux compartiments et deux chambres à air indépendantes, donc avec deux valves, préconise de ce fait d'équilibrer une valve par une autre, en les disposant en opposition sur un même diamètre de façon à ce que leurs effets s'annulent.

Par ailleurs, les roues fabriquées ne sont pas toujours parfaites car leur fabrication admet certaines tolérances, et elles présentent quasiment toutes un déséquilibre dans la répartition des masses par rapport à leur axe de rotation, ce qui conduit à l'observation connue en soi d'un balourd statique.

Pendant des dizaines d'années, on a simplement pallié les problèmes de déséquilibre de répartition des masses des roues en ajoutant des masses supplémentaires en plomb réparties selon des méthodes d'équilibrage maintenant bien connues.

Parallèlement aux progrès sensibles des fabrications de roues diminuant le balourd statique, les constructeurs de véhicules réalisent des produits plus confortables, mais plus sensibles aux non-uniformités de masse.

Il importe donc de réaliser de nouveaux progrès, qui peuvent passer par la poursuite des efforts d'amélioration de la précision de fabrication, nécessairement coûteux, ou par des opérations d'équilibrage plus complètes nécessitant plus de manipulation, et qui ont l'inconvénient annexe d'augmenter la masse de la roue.

La présente invention a pour but de faciliter la solution du problème du balourd statique des populations de roues.

Dans les fabrications classiques de roues pour pneumatique, la jante est percée d'un trou permettant le passage et le maintien en place de la valve de gonflage/dégonflage. La seule contrainte pour le choix de l'emplacement de ce trou de valve réside dans la facilité d'accès de celle-ci. En particulier, dans le cas d'un disque de roue ajouré pour véhicule poids lourd, soit la réalisation du trou de valve dans la jante est déterminée de façon à ce que la valve passe facilement dans un trou de ventilation du disque, soit on fixe le disque dans une position convenable sur la jante déjà percée. Dans le cas de roues pour des véhicules de tourisme, le trou de valve est disposé préférentiellement en regard d'un bras du disque, entre deux ajours.

Dans les deux cas, les emplacements du trou de valve et des trous de ventilation du disque sont liés entre eux, mais le plus souvent au hasard, du point de vue de leur azimutage sur la roue. Le balourd apporté par la valve s'ajoute au moins partiellement à celui de la roue initiale dans environ 50% des cas.

La roue de véhicule comportant un trou de valve selon l'invention, est caractérisée en ce que l'azimut de la position du trou de valve est sensiblement diamétralement opposé à l'azimut du balourd statique de la roue considérée avant l'enlèvement de matière correspondant au réalisation du trou de valve.

Le procédé de fabrication de roues de véhicules selon l'invention est caractérisé en ce que l'on réalise le trou de valve au plus près d'un point situé à 180° de l'azimut du balourd statique de la roue considérée avant l'enlèvement de matière du trou de valve.

Le procédé selon l'invention permettant de réaliser la roue comprend des étapes de fabrication conduisant à une jante sans trou de valve munie de son disque, et consiste à déterminer de façon connue l'azimut du balourd statique de cette roue, puis à réaliser le trou de valve dans la jante, en un point sensiblement diamétralement opposé à l'azimut du balourd statique de la roue initiale.

La détermination de l'azimut du balourd statique de la roue peut être réalisée lors d'une mesure usuelle du balourd statique et de son azimut avec une machine d'équilibrage. On peut aussi plus simplement se contenter de déterminer l'azimut du balourd statique sans mesurer son intensité.

Le procédé selon l'invention peut aussi comporter, si nécessaire, une étape de repérage de l'azimut du balourd statique. C'est-à-dire effectuer un marquage permanent ou non sur la roue de l'azimut de ce balourd statique par rapport à une référence de position quelconque sur la roue.

La réalisation du trou de valve est ensuite effectuée en un endroit en regard du trou de ventilation le plus près du point diamétralement opposé à l'azimut du balourd statique dans le cas d'une roue pour véhicule poids lourd.

Cette réalisation est effectuée de préférence entre les deux trous de ventilation les plus proches du point diamétralement opposé à l'azimut du balourd statique dans le cas d'une roue pour véhicule de tourisme.

Le procédé d'obtention d'une population de roues pour véhicules selon l'invention est caractérisé en ce que la moyenne et l'étendue de la distribution du balourd statique résiduel des roues munies de leur valve, sont abaissées en réalisant le trou de valve au plus près d'un point situé à 180° de l'azimut du balourd statique de la roue prise avant l'opération de réalisation du trou de valve. I1 permet d'éviter des fabrications spéciales plus coûteuses ou de réduire le nombre d'opérations d'équilibrage, voire même de supprimer l'utilisation des masses additionnelles d'équilibrage en plomb.

L'invention sera mieux comprise à la lecture de la description qui suit donnée uniquement à titre d'exemple, faite en se référant au dessin annexé dans lequel :

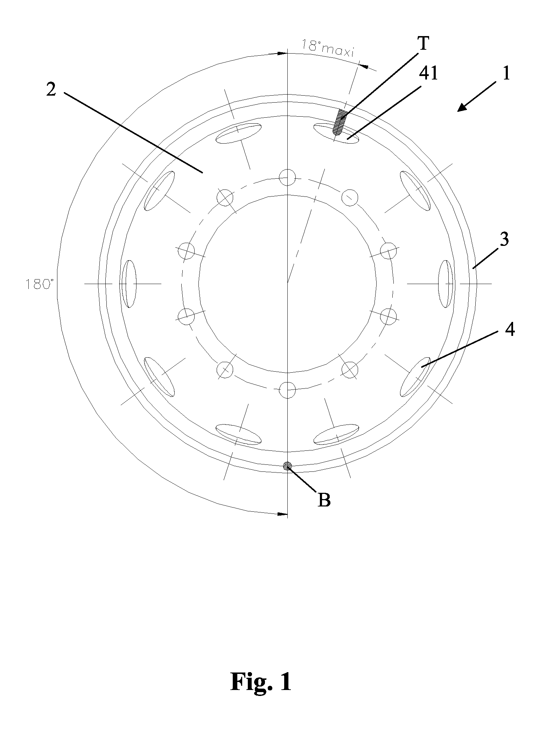

- la figure 1 présente une vue de côté d'une roue pour véhicule poids lourd selon l'invention.

On considère une roue pour véhicule poids lourd d'un diamètre de 22,5 pouces (571,5 mm) au siège de jante. De façon courante, le balourd statique d'une telle roue sans valve ni trou de valve varie de 500 à 3000 (exprimé en grammes x centimètres : g.cm).

L'addition d'une valve sur une telle roue crée un balourd statique déterminé par la masse de la valve (de l'ordre de 35 g.) diminuée de celle du métal éliminé par le trou de valve (environ 3g.), multipliée par la distance du centre de gravité de la valve à l'axe de rotation de la roue. La valeur moyenne de ce balourd statique est d'environ 850 g.cm.

Dans les procédés de fabrication classiques, le balourd statique de la valve s'ajoute ou se retranche totalement ou partiellement au balourd statique de la roue, selon le hasard de leurs positions relatives. Le tableau 1 rassemble les fourchettes de mesure d'environ 97% des valeurs absolues de balourd statique noté B.S. (en g.cm.) pour une population de roues standard équipées de leur valve.

On note pour cette population de roues que l'étendue des valeurs des balourds statiques est importante : 0 à 4200 g.cm. Les valeurs voisines des maximales sont souvent considérées comme excessives. Par simplification, on note B.S.= 0 pour les petites valeurs inférieures à 30 g.cm.

**Tableau 1**

| \|B.S. roue ± | B.S. valve\| | = | B.S. résiduel | Azimut B.S. roue par rapport à B.S. valve |
|---|---|---|---|---|
| 3000 | + 850 | = | 3850 | même azimut |
| 500 | + 850 | = | 1350 | " " |
| 3000 | - 850 | = | 2150 | azimuts opposés |
| 500 | - 850 | = | 350 | " " |
| 850 | - 850 | = | | " " |
| 500 à 3000 | ± 850 x Cos(Azim) | = | 0 à 3850 | positions relatives entre 0 et 180° |

La figure 1 présente, en vue de côté, une roue 1 selon l'invention. Cette roue 1 est constituée d'un disque 2 et d'une jante 3, qui ont été fabriqués et assemblés de façon usuelle. Le point B illustre l'azimut du balourd statique de la roue avant la réalisation du trou de valve. Le trou de valve est situé en un point T situé en regard d'un trou de ventilation 4. Selon l'invention, on place le trou de valve T au plus près de l'opposé de l'azimut du balourd statique (point B) initial de la roue 1. Par exemple en face du trou de ventilation 41 disponible le plus proche. Dans les cas où le disque de roue 2 est muni de 10 trous de ventilation 4, ceux-ci sont décalés l'un par rapport à l'autre de 36°. Quand on place le trou de valve T en coïncidence avec un trou de ventilation 4 du disque 2, il sera situé au plus à 18° du point opposé au balourd statique initial de la roue. Le balourd statique de la valve alors mis en opposition au balourd initial de la roue sera donc au moins de 850 g.cm. x Cos(18°) soit environ 808 g.cm.

Le tableau 2 rassemble des fourchettes de valeurs absolues de balourd statique avec les mêmes conventions qu'au tableau 1, en appliquant l'invention à une population de roues de même nature et caractéristiques.

**Tableau 2**

| \|B.S. roue - | B.S. valve\| | = | B.S. résiduel | Azimut B.S. roue par rapport à B. S. valve |
|---|---|---|---|---|
| 3000 | - 850 | = | 2150 | Azimuts opposés |
| 500 | - 850 | = | 350 | |
| 850 | - 850 | = | 0 | " " |
| 3000 | - 808 | = | 2192 | Azim. à 162° |
| 500 | - 808 | = | 308 | |
| 1140 | - 808 | = | 342 | |
| 500 à 3000 | - 850 à 808 | = | 0 à 2192 | Azimut de 162° à 180° |

On constate que selon le procédé de l'invention, on obtient avec des roues de fabrication normale, des balourds statiques résiduels pour l'ensemble roue + valve toujours inférieurs à environ 2190 g.cm. sans surcoût par rapport aux fabrications classiques systématiquement contrôlées, et sans addition de masses d'équilibrage conventionnelles et supplémentaires.

Pour la très forte proportion de la population de roues initiales dont le balourd statique initial est supérieur à 600 g.cm, l'invention apporte une amélioration du balourd statique résiduel de chaque roue. Pour l'ensemble de la population des roues munies de leur valve, l'étendue et la moyenne des balourds statiques résiduels sont inférieures à celles relevées sur les populations d'origine, et inférieures à l'étendue et à la moyenne des balourds relevés sur une population de roues pour lesquelles la valve est montée sans référence à l'emplacement du balourd statique initial.

De telles populations sont acceptables sans ajout de masses d'équilibrage en plomb complémentaires pour la plupart des exigences concernant les véhicules.

Pour les cas où l'on souhaite un balourd statique résiduel inférieur à une valeur donnée encore plus faible, la compensation par des masses additionnelles reste possible, et la valeur moyenne de celles-ci sera plus faible en appliquant l'invention.

## Revendications

1. Roue (1) de véhicule comportant un trou de valve (T), **caractérisée en ce que** l'azimut de la position du trou de valve T est sensiblement opposé à l'azimut (B) du balourd statique de la roue (1) considérée avant l'opération de réalisation du trou de valve.

2. Procédé de fabrication de roues (1) de véhicule, **caractérisé en ce que** l'azimut de la position du trou de valve (T) est disposé au plus près d'un point situé à 180° de l'azimut (B) du balourd statique de la roue considérée avant l'opération de réalisation du trou de valve.

3. Procédé de fabrication de roues (1) de véhicule, **caractérisé en ce qu'**il comporte les étapes suivantes :
- fabrication de la roue (1) sans trou de valve ;
- détermination de l'azimut (B) du balourd statique de la roue (1) non encore munie de son trou de valve ; et
- réalisation du trou de valve (T) dans la jante (3), en un point (T) sensiblement diamétralement opposé à l'azimut (B) du balourd statique de la roue initiale.

4. Procédé selon la revendication 3, tel qu'il comporte en plus une étape de repérage de l'azimut du balourd statique de la roue non encore munie de son trou de valve.

5. Procédé selon l'une des revendications 2 à 4, dans lequel la réalisation du trou de valve est effectuée en regard du trou de ventilation (41) le plus près du point diamétralement opposé à l'azimut (B) du balourd statique de la roue non encore munie de son trou de valve.

6. Procédé selon l'une des revendications 2 à 4, dans lequel la réalisation du trou de valve est effectuée entre les deux trous de ventilation les plus proches du point diamétralement opposé à l'azimut du balourd statique de la roue non encore munie de son trou de valve.

7. Procédé d'obtention d'une population de roues pour véhicules **caractérisé en ce que** la moyenne et l'étendue de la distribution du balourd statique résiduel des roues munies de leur valve, sont abaissées en réalisant le trou de valve au plus près d'un point situé à 180° de l'azimut du balourd statique de la roue prise avant l'opération de réalisation du trou de valve.
